(19)

Europäisches
Patentamt
European
Patent Office
Office européen
des brevets

(11) **EP 2 246 372 A1**

(12) **EUROPEAN PATENT APPLICATION**

(43) Date of publication:
**03.11.2010 Bulletin 2010/44**

(21) Application number: **09159142.0**

(22) Date of filing: **30.04.2009**

(51) Int Cl.:
**C08F 210/16** (2006.01)     **C08F 2/00** (2006.01)
**C08F 4/655** (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Borealis AG**
**1220 Vienna (AT)**

(72) Inventors:
• **Garoff, Thomas**
**00840, Helsinki (FI)**

• **Waldvogel, Päivi**
**06450, Porvoo (FI)**
• **Kallio, Kalle**
**06400, Porvoo (FI)**
• **Eriksson, Virginie**
**00810, Helsinki (FI)**
• **Aittola, Aki**
**01120, Västerskog (FI)**
• **Kokko, Esa**
**01520, Vantaa (FI)**

(74) Representative: **Kador & Partner**
**Corneliusstrasse 15**
**80469 München (DE)**

(54)     **Improved multi-stage process for producing multi-modal linear low density polyethylene**

(57)     Multi-stage polymerization process for the production of a multi-modal linear low density polyethylene in at least two staged reactors connected in series comprising at least
(i) polymerizing in a first slurry phase stage ethylene monomers and optionally one or more alpha-olefine comonomers, in the presence of a Ziegler-Natta polymerization catalyst system to obtain a first polyethylene fraction component (A)
(ii) polymerizing in a second gas or slurry phase stage ethylene monomers and one or more alpha-olefine comonomers, in the presence of a Ziegler-Natta polymerization catalyst system to obtain a second polyethylene fraction component (B),

whereby the Ziegler-Natta polymerisation catalyst system comprises
C) a procatalyst, which procatalyst comprises
a) an Al compound having the formula $Al(alkyl)_xCl_{3-x}$ (I), where alkyl is an alkyl group with 1 to 12 and $0 \leq x \leq 3$,

b) a magnesium hydrocarbyloxy compound of formula $Mg(OR^1)_{2-n}(R^2)_n$ (II), wherein each $R^1$ and $R^2$ is independently a $C_{1-20}$ hydrocarbon residue which may optionally be substituted with halogen and $0 \leq n < 2$ and
c) a chlorine-containing titanium compound of the formula $Cl_yTi(OR^3)_{4-y}$ (III), wherein $R^3$ is a $C_{2-20}$ hydrocarbon residue and y is 1, 2, 3 or 4 and

compounds a), b) and c) being deposited on a particulate inorganic support and
D) a halogenated aluminium alkyl cocatalyst of the formula (IV) $(C_1-C_4-alkyl)_m-Al-X_{3-m}$, wherein X is chlorine, bromine, iodine or fluorine and m is 1 or 2, and

yielding a multimodal linear low density polyethylene with a narrow molecular weight distribution,
whereby the process shows a higher comonomer conversion compared to multi-stage processes using non-halogenated cocatalysts.

**EP 2 246 372 A1**

**Description**

The invention relates to an improved multi-stage process for producing multi-modal linear low density polyethylene (LLDPE) in the presence of a Ziegler-Natta procatalyst and a halogenated aluminium alkyl as cocatalyst. The process shows improved operability and yields LLDPE with improved properties.

One of the main challenges when producing linear low density polyethylene (LLDPE) grades in full scale is the formation of chunks, lumps and sheeting. These problems are very pronounced when using a Ziegler-Natta type of catalyst.

One of the main reasons is the poor comonomer composition distribution coupled to the loss of comonomer sensitivity respectively response with time. As is known from the state of the art Ziegler-Natta (ZN) catalyst compositions tend to change their behaviour during the polymerization process in respect of time ("time-drift"), which has a huge impact on polymer properties and polymer homogeneity.

This s.c. "time -drift" in catalyst behaviour causes even more problems if the polymerization process is a continuous multi-stage process, where residence time distribution combined with the "time-drift" problem can lead to further inhomogeneity of the polymer produced and to the formation of sticky material. For example, it can happen, that catalyst particles that stayed a longer time in the first reactor may have very low comonomer response in the second reactor where copolymerization is usually performed. In the worst case polymer particles are produced containing a lot of comonomer and on the other hand polymer particles containing virtually no comonomer at all are yielded.

As is also known in the art, ZN catalysts tend to produce ethylene polymers having broad molecular weight distributions.

The broadness of a PDI may be described by the ratio of the weight average molecular weight (Mw) and the number average molecular weight (Mn). A high value of Mw/Mn (PDI) indicates a broad molecular weight distribution.

Polyethylene requires for certain applications a bimodal distribution of molecular weight in order to yield optimal structural characteristics and physical properties. This can be achieved by ensuring that the polyethylene contains a component having a lower molecular weight (LMW component) and a component having a higher molecular weight (HMW component). The lower molecular weight mode imbues the final polymer with the desired processibility, whilst the higher molecular weight mode imbues the product with the necessary durability and hardness.

When ZN catalysts are used to produce bimodal polymers both the lower and the higher molecular weight components tend to have a broad PDI. In particular the HMW components tend to have significant lower molecular weight "tails" which have deleterious affects on the mechanical properties of the polymer and on articles made from the polymer.

Furthermore mixing the two components to form the final polymer can be problematic. The greater the difference between the molecular weights of the components, the more difficult it is to mix those components. Accordingly, using known processes a limitation has been set on the degree of processibility and durability, based upon the need for the component modes to be miscible to an acceptable degree.

This tailing or too broad molecular weight distribution can cause even bigger problems in a multi-stage process with more than two reactor zones in which different chemicals composition (like different comonomers, cocatalysts, chain transfer agents like H2, etc.) and also different physical parameters (like different temperature, pressure, stirring etc.) are applied. When very precise polymer structural compositions are required, it is important that just the right polymer composition is produced in one specific reactor zone. If the catalyst used leads to - for example - too broad molecular weight distributions in the different reaction zones, then the obtained compositions seem to overlap and the benefit of specific reactor zone compositions is lost. This problem especially occurs when traditional Ziegler-Natta catalyst systems are used. Therefore Ziegler-Natta catalyst systems which are able to produce narrow PDI and narrow comomomer distribution with no overlapping and thus gaining all benefits of each polymerisation stage or zone are desired for making highly tailored polymer properties.

In the past, attempts have been made to devise processes for producing multi-, preferably bimodal polyolefins. One well-known process makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, e.t.c..

The polymerization may be carried out continuously or batch wise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

Summing up, it is known that there are several disadvantages of multi-, like two-stage processes for producing multi-, like bimodal LLDPE known from the state of the art using conventional Ziegler-Natta catalyst compositions, which have essentially two components: a compound of a transition metal belonging to any of groups 4 to 6 of the Periodic Table of Elements (IUPAC 2007) which is often called a procatalyst, and a compound of a metal belonging to groups 1, 2 or 13 of said Table which is the s.c. cocatalyst.

As stated above bimodal polymers produced have lower and higher molecular weight components both tending to have a broad PDI, where in particular the HMW components tend to have significant lower molecular weight "tails" which have deleterious affects on the mechanical properties of the polymer and on articles made from the polymer, which can be even worse if multi-stage processes are employed.

A further problem encountered when manufacturing multi-modal LLDPE is reactor fouling. The lower density component (i.e. HMW component) of such a multi-modal resin has very low crystallinity which was thought to lead to reactor fouling.

An additional problem, as already mentioned above, is the inhomogeneity of the polymer produced due to the s.c. time drift and residence time distribution, which inhomogeneity between different polymer particles can be very large when each particle spent different times in the two or more stages of the polymerization process, leading to very different comonomer incorporation in different polymer particles.

Furthermore these known processes need quite a high comonomer concentration to reach high comonomer incorporation and thus lower densities, especially in the HMW component.

The polymer bulk density of such LLDPEs produced according to the state of the art is often very bad so that the polymers are so sticky that measurement failed.

Hence, there is still a need for improved methods which avoid the disadvantages and lacks in well-known multi-stage processes using conventional Ziegler-Natta catalyst systems, show an improved operability, have increased comonomer conversion and provide multi-, preferably bimodal LLDPE having a narrow molecular weight distribution, improved polymer bulk density, improved polymer flowability, more narrow particle size distribution and improved comonomer composition distribution.

It was thus an object of the present invention to provide a multi-, preferably two-stage process for producing multi-, preferably bimodal linear low density, which allows for the production of olefin copolymers with improved properties which can be "tailored". I.e. it is a target of the invention to provide a method, which allows polymer properties, like bulk density, polymer flowability, particle size distribution, molecular weight distribution, comonomer composition distribution, amount of xylene soluble polymer fraction and density to be tailored. The process should further have an improved operability.

It has now surprisingly been found that these objects are achieved by a multi-stage process using a Ziegler-Natta catalyst composition comprising a special procatalyst containing a group 13 metal, chlorine, magnesium and titanium atoms, supported on a particulate inorganic carrier and a halogenated aluminium alkyl as cocatalyst.

Therefore, the present invention provides a multi-stage process for the production of linear low density polyethylene in at least two staged reactors connected in series comprising

(i) polymerizing ethylene monomers and optionally one or more alpha-olefine comonomers, in the presence of a Ziegler-Natta polymerisation catalyst system to obtain a first polyethylene fraction component (A)
(ii) polymerizing ethylene monomers and optionally one or more alpha-olefine comonomers, in the presence of a Ziegler-Natta polymerisation catalyst system to obtain a second polyethylene fraction component (B),
wherein the second polymerization step is carried out in the presence of the polymerization product of the first polymerization step and
wherein either the polyethylene fraction component (A) or (B) forms the lower molecular weight component of the linear low density polyethylene and the other polyethylene fraction forms the higher molecular weight component of the linear low density polyethylene,
whereby the Ziegler-Natta polymerisation catalyst system comprises

C) a procatalyst, which procatalyst comprises

a) an Al compound having the formula $Al(alkyl)_xCl_{3-x}$ (I), where alkyl is an alkyl group with 1 to 12 and $0 \le x \le 3$,

b) a magnesium hydrocarbyloxy compound of formula $Mg(OR^1)_{2-n}(R^2)_n$ (II), wherein each $R^1$ and $R^2$ is independently

a $C_{1-20}$ hydrocarbon residue which may optionally be substituted with halogen and $0 \leq n < 2$ and

c) a chlorine-containing titanium compound of the formula $Cl_yTi(OR^3)_{4-y}$ (III), wherein $R^3$ is a $C_{2-20}$ hydrocarbon residue and y is 1, 2, 3 or 4 and

compounds a), b) and c) being deposited on a particulate inorganic support and

D) a halogenated aluminium alkyl cocatalyst of the formula (IV) $(C_1\text{-}C_4\text{-alkyl})_m\text{-Al-}X_{3-m}$, wherein X is chlorine, bromine, iodine or fluorine and m is 1 or 2, and
yielding a multimodal linear low density polyethylene with a narrow molecular weight distribution, measured with GPC, in the range of 5 to 20, a bulk density of the polymer powder, determined according to ASTM D1895-96, method A of at least 250kg/m$^3$ to 500kg/m$^3$, a density according to ISO 1183 of less than 925 kg/m$^3$ and a $C_4$-$C_{12}$-comonomer content of 1 to 10 wt%,
whereby the process shows a higher comonomer conversion compared to multi-stage processes using non-halogenated cocatalysts.

It has been found that the process of the invention allows for the production of multi-, preferably bimodal LLDPE the properties of which can be "tailored" and "fine tuned" by the use of the special ZN catalyst composition of the invention. In particular, the combination of the multi-, preferably two-stage process and the special ZN-catalyst composition allows for the production of multi-, preferably bimodal LLDPE with improved properties such as an improved comonomer composition distribution, i.e. a more even comonomer distribution also in respect to polymerization time, as can be detected e.g. by TREF (temperature rising elution fractionation) analyses, narrow PDI, more narrow particle size distribution, improved bulk density and polymer flowability in combination with higher comonomer conversion, which allows to use the comonomers in a more effective way with lower comonomer/ethylene ratios.

Comonomer composition distribution (CCD) refers to the distribution of comonomer between copolymer molecules and the distribution of comonomer within each polymer molecule. CCD has effects on polymer properties, like crystallinity, optical properties, toughness, melt processability and many other properties as well.

The polymers which can be produced with the combination of the multi-stage process and the special ZN catalyst composition according to the invention show an improved CCD. As a consequence of the improved CCD, even with reasonable high comonomer contents a decreased xylene solubles (XS) content can be achieved, which is believed to be caused by the improved comonomer distribution. It should be noted that the combination of the multi-stage process and the special ZN catalyst composition according to the invention allow for the production of multi-modal LLDPEs with a comparatively narrow molecular weight distribution.

Especially PDI, comonomer composition distribution, and thus XS, density and $M_w$ are properties, which can be tailored by using the combination of the multi-stage process and the special ZN the catalyst composition according to the invention.

The invention is based on the use of the combination of a multi-stage polymerization process and a special ZN catalyst composition comprising a special procatalyst and a halogenated aluminium alkyl cocatalyst.

Ad ZN catalyst polymerization composition:

The procatalyst (C) of the catalyst composition according to the invention comprises a reaction product (RP) of a) an alkyl aluminium chloride, which is an internal soluble chlorination agent and which also has a cocatalytically impact, b) a soluble magnesium hydrocarbyloxy compound (named hereafter a magnesium complex) and c) a titanium compound which contains chlorine.

The catalyst components a), b) and c) are deposited on a suitable inorganic catalyst support to give said procatalyst C).

There are two possible ways for depositing the catalyst components on a suitable inorganic catalyst support, i.e. by sequentially contacting the support with the above mentioned compounds, as described in EP 0 688 794 or EP 0 835 887, or by first preparing a solution from the components a), b) and c) and then contacting the solution with a support, as described in WO 01/55230, all of which are herein fully incorporated by reference.

Variant I, according to EP 0 688 794 or EP 0 835 887, comprises the following steps:

- the inorganic support is contacted with the alkyl aluminium chloride a) to give a first reaction product,
- the first reaction product is contacted with the magnesium complex b) to give a second reaction product,
- the second reaction product is contacted with the titanium compound c) to give said procatalyst.

Variant II, according to WO 01/55230, comprises the following steps:

- reacting the magnesium complex b) with the alkyl aluminium chloride a) in a non polar hydrocarbon solvent in which said magnesium complex is soluble to produce a solution (S1)

- contacting the solution (S1) with the titanium compound c) to produce a solution (S2) and
- contacting solution (S2) with the inorganic support to give said procatalyst.

Preferably the procatalyst used according to the invention is prepared according to variant I.

The procatalyst used according to the invention comprises catalyst components a), b) and c).

Catalyst component a) is an aluminium compound of the formula $Al(alkyl)_xCl_{3-x}$ (I), wherein alkyl is an alkyl group of 1 to 12 C-atoms, preferably 1 to 8 C-atoms, more preferably 1 to 6 C-atoms and $0 \leq x \leq 3$, preferably x is 1 or 2.

The alkyl group can be linear, branched or cyclic, or a mixture of such groups.

Suitable aluminium compounds are for example dimethyl aluminium chloride, diethyl aluminium chloride, diisobutyl aluminium chloride, ethyl aluminium dichloride, methyl aluminium dichloride and triethylaluminium or mixtures therefrom.

Preferably used as catalyst component a) are alkyl aluminium dichlorides, more preferably ethyl aluminium dichloride (EADC).

The magnesium complex b) of formula $Mg(OR^1)_{2-n}(R^2)_n$ (II) used in the procatalyst synthesis is totally soluble in non-polar hydrocarbon solvents.

In the formula (II) each $R^1$ and $R^2$ is independently a $C_{1-20}$ hydrocarbon residue, e.g. a $C_{2-15}$ group, preferably $C_{3-10}$ group, such as $C_{4-8}$ group, e.g. linear, cyclic or branched alkyl, aryl, aralkyl or alkaryl, suitably a linear or branched alkyl, preferably a branched alkyl, such as 2-ethyl-1-hexyl, or ethyl, propyl, butyl, pentyl, hexyl, heptyl, octyl, which may optionally be substituted with halogen and $0 \leq n < 2$.

Said magnesium complex may be commercially available or, preferably, can be prepared by reaction of a magnesium dihydrocarbyl (e.g. dialkyl) compound of the formula $Mg(R^2)_2$ wherein each $R^2$ is independently as defined above with an alcohol $R^1OH$, wherein $R^1$ is as defined above.

Preferred magnesium dialkyl starting compounds include dibutyl magnesium, butyl ethyl magnesium or butyl octyl magnesium. More preferably butyl octyl magnesium (BOMAG) is used.

Suitable alcohols include octanol, hexanol, butanol, 2-ethyl-1-hexanol, 2-propyl-pentanol and 2-methyl-1-pentanol. More preferably 2-ethyl-1-hexanol is used.

The magnesium dialkyl/alcohol molar ratio is from 1:1 to 1:4, preferably from 1:1.5 to 1:3.5, more preferably from 1:1.7 to 1:2.0.

The reaction of the magnesium dialkyl and the alcohol may take place at any temperature but preferably takes place at a low temperature, e.g. 0-40°C, especially at room temperature.

Component c) is chlorine-containing titanium compound of the formula $Cl_yTi(OR^3)_{4-y}$ (III), wherein $R^3$ is a $C_{1-20}$ hydrocarbon residue, preferably a $C_{2-10}$ and more preferably a $C_{2-8}$ hydrocarbon residue. y is 1, 2, 3 or 4, preferably 3 or 4 and more preferably 4.

Suitable titanium compounds include trialkoxy titanium monochlorides, dialkoxy titanium dichloride, alkoxy titanium trichloride and titanium tetrachloride. Preferably titanium tetrachloride is used as component c).

In each preparation method as described above the components a), b) and d) may be added in molar ratios known in the art. Generally in the final solid procatalyst, the molar ratio of Mg:Ti can be e.g. between 10:1 to 1:10, preferably 5:1 to 1:1. The molar ratio of Ti:Al can be e.g. between 10:1 to 1:2, e.g. 3:1 to 1:1.

The particulate inorganic support (i) can be an inorganic oxide support, such as silica, alumina, titania, silica-alumina and silica-titania. Preferably, the support is silica.

The surface area, pore volume and particle size of the silica can be chosen according to the requirements of the specific polymerization process, in which the catalysts will be used. Typically, silica particles having a surface area in the range of from about 10 to about 700 $m^2/g$ (BET method), pore volume in the range of from about 0.1 to about 6.0 $cm^3/g$ and average particle size in the range of from about 10 to about 100 $\mu m$ can be used. However, it has turned out that special advantages can be obtained if the support has an average particle size from 15 to 30 $\mu m$, preferably from 18 to 25 $\mu m$.

The silica may be in granular, agglomerated, fumed or other form.

It is further preferred that the support material is calcinated, i.e. heat treated under air and then with a non-reactive gas such as nitrogen. This treatment is preferably done at a temperature in excess of 100 °C, more preferably 200 °C or higher, e.g. 200-800 °C, particularly about 600°C. The calcination treatment is preferably effected for several hours, e.g. 2 to 30 hours, more preferably about 10 hours. Examples of suitable support materials, which are commercially available, are, for instance, ES747JR, produced and marketed by Ineos Silicas (former Crossfield), and SP9-491, Sylopol 55SJ, produced and marketed by Grace, etc..

A most preferred procatalyst A) is obtained by a process according to Variant I, as described in EP 0 688 794 or EP 0 835 887, using EADC as catalyst component a), a magnesium complex b) prepared by reacting BOMAG and 2-ethyl-1-hexanol, and titanium tetrachloride as component c), which are deposited on a silica support.

The second component of the Ziegler-Natta catalyst composition is the halogenated aluminium alkyl cocatalyst

of formula (IV) $(C_1-C_4-alkyl)_m-Al-X_{3-m}$, wherein X is chlorine, bromine, iodine or fluorine and m is 1 or 2.

The $C_1-C_4$-alkyl groups can be linear or branched or cyclic, or a mixture of such groups.

X is preferably chlorine or bromine, most preferably X is chlorine.

Suitable cocatalysts are for example dimethyl aluminium chloride (DMAC), diethyl aluminium chloride (DEAC), diisobutyl aluminium chloride (DIBAC), ethyl aluminium dichloride (EADC), methyl aluminium dichloride (MADC).

Preferred cocatalysts according to the invention are EADC or DEAC, which can be used in combination with triethyl aluminium (TEAL) or more preferably alone as a pure cocatalyst.

If EADC or DEAC are used in combination with TEAL the preferred molar ratio for halogenated aluminium alkyl : TEAL is from 5:95 to 95:5, preferably 10:90 to 90:10, more preferably 20:80 to 80:20, and most preferably 50:50. More preferably used are EADC in combination with TEAL (1:1 mixture) or DEAC alone. Most preferably used is pure DEAC.

The cocatalyst is typically used in excess to the transition metal of the transition metal compound. For instance, the molar ratio of the aluminium in the cocatalyst to the titanium in component c) is from 1 to 500 mol/mol, preferably from 2 to 100 mol/mol, more preferably from 5 to 50 mol/mol and in particular from 10 to 40 mol/mol.

The manner of combining the cocatalyst with the precursor is not critical to the present invention. Thus, the cocatalyst may be combined with the precursor either outside the reaction vessel prior to the polymerization reaction or it can be introduced into the reaction vessel substantially simultaneously with the precursor. Furthermore it is also possible that the halogenated cocatalyst is only fed to the second reactor, if copolymerization is performed only in the second reactor.

Generally the quantity of catalyst composition used depends upon the nature of the catalyst composition, the reactor types and conditions and the properties desired for the polymer product.

Ad multi-stage process:

The ZN catalyst polymerization composition hereinbefore described is employed in a at least two-stage polymerization process. In such a polymerisation the reactors are connected in series such that the products of one reactor are used as the starting materials in the next reactor. The polymerisation may be carried out continuously or batch wise.

The first reactor producing the first polyethylene fraction (A) can be the higher molecular weight reactor or the low molecular weight reactor, the second reactor producing the second polyethylene fraction (B) being the opposite. The reactor is named according to the relative molecular weight of the polymer produced in the reactor.

Multimodal polymers with respect to the molecular weight distribution (MWD) are produced in a multistage process, where lower molecular weight and higher molecular weight polymers (components) are produced in different polymerization steps, in any order.

A relatively low density (or HMW fraction) copolymer can be prepared in the first reactor and the relatively high density (or LMW fraction) copolymer in the second reactor. This can be referred to as the reverse mode. Alternatively, the low molecular weight copolymer can be prepared in the first reactor and the high molecular weight copolymer in the second reactor. The can be referred to as the normal mode and is preferred.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise gas phase polymerization steps.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

The slurry and gas phase processes are well known and described in the prior art.

The LLDPE according to the invention preferably is produced so that at least one of fractions (A) and (B), preferably (B), is produced in a gas-phase reaction.

Further preferred, one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

Further, the polyethylene base resin preferably is produced in a two-stage process, whereby the fractions (A) and (B) may be produced in any order.

In a preferred embodiment of the invention the LMW fraction is produced first and the HMW fraction is produced in the presence of LMW fraction. In this case the LMW fraction is the first polyethylene fraction (A) and the HMW fraction is the second polyethylene fraction (B).

Most preferably, the LLDPE of the invention is produced in a two-stage process comprising a loop reactor and a gas phase reactor, whereby the LMW fraction of the LLDPE is first produced in the loop reactor and the HMW fraction is produced in the gas phase reactor in the presence of the LMW fraction. This type of process is developed by Borealis A/S, Denmark and known in the art as BORSTAR® technology, described e.g. in patent literature, such as in EP 0 517 868, EP 0 887 379.

The two-stage process can be combined with one or more, preferably one additional polymerization steps. Such processes are for example described in EP 1 633 466 or EP 2 011822.

These processes, in combination with the above described ZN polymerization catalyst composition, enables the production of LMW and HMW fractions with substantially differing densities and allows tailoring of the other polymer properties, i.e. the preferred process is especially advantageous for producing in situ blends with low density.

The lower molecular weight polymer fraction is preferably produced in the slurry phase.

For slurry reactors the polymerization medium typically comprises ethylene, optionally a comonomer, a diluent and a catalyst system as hereinbefore described. The diluent used will generally be an aliphatic hydrocarbon having a boiling point in the range -70 to +100 °C. Preferred diluents include hydrocarbons such as propane, n-butane or isobutane, with propane as particularly preferred. Hydrogen is also preferably fed into the reactor to function as a molecular weight regulator. In a typical slurry phase polymerization the temperature is preferably in the range 40 to 110 °C, preferably 60 to 100 °C, and in particular 85 to 100°C.

The reaction pressure is typically 10 to 150 bar, preferably 15 to 100 bar.

In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture. When propane is used as a diluent an example of a suitable operating temperature is 95 °C and pressure 60 bar when employing supercritical conditions.

Polymerization in the first reactor (e.g. a loop reactor) is typically carried out for 10 to 300 minutes, preferably 20 to 120 minutes and the most preferably 30 to 90 minutes.

At least part of the volatile components of the reaction medium (e.g. hydrogen) may then be removed. The product stream is then subjected to a second polymerization stage.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

In a preferred embodiment, the LMW fraction is an ethylene copolymer which has preferably a density of at least 920 kg/m$^3$, a preferred density range being 930 to 960 kg/m$^3$.

Furthermore, preferably the LMW fraction has a weight average molecular weight Mw of 5000 to 50 000 g/mol, more preferably 10 000 to 50 000 g/mol.

The MFR$_2$ of the LMW fraction preferably is at least 50 g/10min, more preferably at least 100 g/10min. The upper limit for the MFR$_2$ of the LMW fraction is preferably 400 g/10min.

The comonomer content in the LMW fraction is preferably in the range of 0.1 to 3.0 wt%, preferably 0.5 to 2.5 wt% and more preferably 1.0 to 2.0 wt%.

In a particularly preferred method of the invention the LMW fraction produced in the first stage preferably comprises 10 to 90 % by weight, more preferably 30 to 70, still more preferably 40 to 65 % by weight of the total weight of the final polymer.

In the second polymerisation stage the HMW component of the LLDPE polymer is preferably produced. The second stage is preferably carried out in the gas phase. The polymer produced in the second stage preferably comprises 90 to 10 %, preferably 70 to 30 %, more preferably 65 to 40 % by weight of the total copolymer composition (i.e. the LMW:HMW component weight ratio is preferably 10:90 to 90:10, preferably 30:70 to 70:30, more preferably 40:65 to 65:40)

The slurry of the first polymerization step is intermittently or continuously removed from the slurry phase reactor and transferred to a separation unit where at least the chain transfer agents (e.g. hydrogen) are separated from the polymer. The polymer containing the active catalyst is then introduced into a gas phase reactor where the polymerization proceeds in the presence of additional ethylene, C$_4$-C$_{12}$ comonomer(s) and optionally chain transfer agent to produce the higher molecular weight copolymer fraction. Preferably no fresh catalyst and/or cocatalyst are added in the second polymerization step.

As gas phase reactors preferably fluidized bed gas phase reactors, fast fluidized bed gas phase reactors or settled bed gas phase reactors can be used.

Ad fluidized bed gas phase reactors:

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer (s), eventual chain growth controllers or chain transfer agents, such as hydrogen, and eventual inert gas.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

The reactor may also include a mechanical agitator to further facilitate mixing within the fluidized bed. An example of suitable agitator design is given in EP-A-707513.

Ad fast fluidized bed reactor:

In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.

Ad settled bed reactor:

In the settled bed the polymer flows downward in a plug flow manner in an environment containing reactive components in gaseous phase. The polymer powder is introduced into the bed from the top from where it flows downwards due to gravity.

Polymerization in settled bed is disclosed, among others, in EP-A-1633466, EP-A-1484343 and WO-A-97/04015.

In the process according to the invention preferably a fluidized bed gas phase reactors is used for the second polymerization step.

For gas phase reactors used according to the invention, the reaction temperature used will generally be in the range 60 to 115°C (e.g. 70 to 110°C), the reactor pressure will generally be in the range 10 to 30 bar, and the residence time will generally be 0.5 to 8 hours. Preferably the residence time in the gas phase reactor is 1 to 4 hours, more preferably 1.5 to 3 hours.

The polymerization medium in the second stage typically comprises ethylene, comonomers (e.g. 1-butene, 1-hexene, or octene), nitrogen, propane and optionally hydrogen.

The properties of the fractions produced in the second step of a two-stage process can either be inferred from polymers, which are separately produced in a single stage by applying identical polymerisation conditions (e.g. identical temperature, partial pressures of the reactants/diluents, suspension medium, reaction time) with regard to the stage of a two-stage process in which the fraction is produced, and by using a catalyst on which no previously produced polymer is present. Alternatively the properties of the second component can be derived from an analysis of the LMW component and the final polymer. Such calculations can be carried out using various techniques, e.g. K. B. McAuley: Modelling, Estimation and Control of Product Properties in a Gas Phase Polyethylene Reactor. Thesis, McMaster University, August 1991 . or K. McAuley and J. McMacGregor, AIChE Journal, Vol. 37, no. 6, pages 825 - 835 . B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13 . In addition, subtracting GPC curves, when fractions of each polymer are known is possible.

Thus, although not directly measurable on the two-stage process products, the properties of the fractions produced in the second stage of such a two-stage process can be determined by applying either or both of the above methods. The skilled person will be able to select the appropriate method.

In a preferred embodiment, the HMW fraction is an ethylene copolymer which has preferably a density of at least 860 kg/m$^3$, a preferred density range being 890 to 920 kg/m$^3$. The preferred molecular weight range is 300 000 - 1 500 000g/mol.

The comonomers which can be employed in both stages in the present invention include $C_{4-12}$ alpha olefins, preferably selected from but-1-ene, hex-1-ene, 4-methyl-pent-1-ene, hept-1-ene, oct-1-ene, and dec-1-ene, more preferably but-1-ene and hex-1-ene. Preferably hexene or butene, or a mixture of hexene and butene is used in both slurry and gas phases. In one embodiment of the invention only one comonomer is used. The comonomer is e.g. hexene or butene, preferably butene.

In another embodiment of the invention the LLDPE composition comprises at least two comonomers, such that the composition is a terpolymer. The two comonomers are preferably a mixture of hexene and butene. In a preferred two-stage process, the two or more, preferably two, comonomers can be added in the same polymerisation reactor or each comonomer in a different reactor. Thus, in case of a sequential reactors, such as slurry-gas phase reactor system, the two or more, suitably two, comonomers can both be added in the first reactor (e.g. slurry reactor) and in the subsequent reactor (e.g. the gas phase reactor).

Alternatively, the one or more, preferably two comonomers, can be added to only one of the two-stage reactors, e.g. in case of loop and gas phase reactors, only one of these two reactors.

In a further embodiment the two comonomers are added each in different reactors, e.g. in a two-reactor system, one comonomer is added in the first reactor, such as slurry, preferably loop, and the other comonomer is added only in the subsequent reactor, such as gas reactor.

Alternatively, one of the comonomers can be added in each reactor of a two-reactor system, and the other comonomer(s) only in one reactor.

If desired, the polymerization may be effected in a known manner under supercritical conditions in the slurry, preferably loop reactor, and/or as a condensed mode in the gas phase reactor.

If the polymerization process comprises one or two additional polymerization steps, these steps are preferably performed in gas phase reactors, as described above.

Any combination of gas phase reactors can be used.

For example, the polymerization product of the second polymerization step, which is either a fluidized bed polymerization step or a fast fluidized bed polymerization step, preferably a fluidized bed polymerization step is transferred into a third polymerization reactor, which is for example a settled bed polymerization reactor. The product from the third polymerization step is optionally transferred into a fourth reaction step, which uses for example again a fluidized bed polymerization reactor. From the fourth reaction reactor the polymer is recovered and sent to further processing.

The use of two or three subsequent fluidized bed polymerization reactors is a further possibility.

The reactor system may additionally comprise other reactors, e.g. for pre-polymerisation. Pre-polymerisation may be used, for example, to provide the catalyst in a solid particulate form or to activate the catalyst. In a typical pre-polymerisation, monomer (e.g. ethylene) is polymerised with catalyst as hereinbefore described to yield, for example, 0.1 to 1000 g polymer per gram of catalyst. The polymer formed during pre-polymerisation forms less than 10 % by weight, preferably less than 7 % by weight, typically less than 5 % by weight of the total weight of the final polymer. Still more preferably only 2-3 % of the total weight of the polymer is formed during any prepolymerisation step. A pre-polymerisation is therefore not intended to represent one of the stages of the multistage polymerisation process hereinbefore described.

The process according to the invention shows an improved overall comonomer conversion compared to processes using conventional ZN polymerisation catalyst compositions. Due to this improved comonomer conversion lower densities can be achieved with lower comonomer feed(s) and - concentrations, both in a loop and a gas phase reactor.

This is very advantageously since it is known that very high comonomer concentrations in the polymerisation process often dissolves some catalyst components, swells polymer particles and causes tendency for cheating and chunking.

Thus, the process according to the invention shows improved operability and avoids reactor fouling.

Furthermore it is known that conventional ZN polymerisation catalyst compositions in loop - gas phase processes have very poor comonomer response already in the loop reactor which leads to the need of very high and unpractical comonomer concentrations in the loop reactor for reaching densities below 935 kg/m$^3$.

With the process according to the invention improved comonomer response and comonomer distribution is achieved, thus allowing the production of products having also lower density.

Using the special catalyst system comprising a halogenated aluminium alkyl cocatalyst makes it furthermore possible to produce a copolymer in the gas phase reactor with higher MFR$_{21}$ than achieved with a non-halogenated aluminium alkyl cocatalyst, despite almost the same comonomer contents are used.

The resulting LLDPE produced according to the above described process is multi-, preferably bimodal.

As used herein the terms "multi-modal" and "bimodal" are intended to cover polymers having at least two differently centred maxima along the x-axis of their molecular weight distribution curve as determined by gel permeation chromatography. In such a curve d(log(Mw)) is plotted as ordinate against log (Mw), where Mw is molecular weight.

The PDI (Mw/Mn) of the multi- preferably bimodal LLDPE produced according to the invention is in the range of 5 to 20, preferably 7 to 15 and more preferably 8 to 13.

The final PDI of the LLDPEs produced by the multi-stage polymerisation process is the result of the PDIs produced in each stage.

With the process according to the invention narrower PDI is achieved due to the fact that the fraction of wax-type low molecular weight material containing high amount of comonomer is reduced.

Due to the use of the special ZN polymerization catalyst composition the PDI of the multi-, preferably bimodal LLDPE produced according to the invention is narrower than the PDI of LLDPEs produced with state of the art ZN polymerization catalyst composition.

The density according to ISO 1183 of the final multi-, preferably bimodal LLDPE produced according to the invention is less than 925 kg/m$^3$ and at least 900 kg/m$^3$.

The final LLDPE can have an overall comonomer content of up to 10 wt %.

More preferably, however, the final polymer has a comonomer content of up to 8 wt%. The amount of comonomer in the LLDPE produced in the second stage can be calculated based on the final amount present in the LLDPE, the amount in the polymer produced in the first stage and on the production split between the first and second stages.

The final LLDPE which results preferably has a MFR$_{21}$ of 0.1 to 10 g/10 min, preferably 0.5 - 5.0 g/10 min as measured according to ISO 1133 at 190 deg. C under a 21.6 kg load.

The weight average molecular weight (Mw) of preferred final LLDPE is in the range 40 000 to 600 000, more preferably 50 000 to 500 000, still more preferably 100 000 to 400 000 as measured by gel permeation chromatography.

The LLDPEs prepared with the ZN polymerization catalyst composition of the invention have higher settled bulk densities according to ASTM D1895-96, method A, i.e. of at least 250 kg/m$^3$ than the LLDPE prepared with similar catalyst systems synthesized with TEAL or other prior art activators, and further have substantially improved higher alpha-olefins, e.g., 1-butene and/or 1-hexene, incorporation properties, as compared to different catalyst compositions.

In addition, as a result of the invention more homogeneous final LLDPE product is obtained compared to products produced by conventional ZN polymerization catalyst compositions. In the bimodal LLDPE produced according to the invention there are less agglomerated gel components formed by particles producing very HMW polymer components. Thus excellent homogeneity is achieved.

Furthermore, in the final LLDPE product of the invention also a uniform distribution of the LMW and HMW fractions within the individual particles, i.e. a high compositional homogeneity, is obtained due to the advantageous combination of multi-stage polymerization process and the above described ZN polymerization catalyst composition.

In addition the final LLDPE shows a narrower particle size distribution and improved polymer flowability compared to LLDPE produced by using conventional Ziegler-Natta catalyst systems.

The LLDPE of the present invention may also comprise conventional additives such as antioxidants, UV stabilisers, acid scavengers, anti-blocking agents, polymer processing agent etc. The amounts of these compounds may be readily determined by those skilled in the art. These may be added to the polymer using conventional techniques.

The polymers produced according to the method of the present invention may be used to manufacture articles such as films and pipes. The polymers may, for example, be used be used to form a complete film or a layer of a multilayer film. The film may be produced by any conventional technique known in the art, e.g. blowing or casting. Films made using the polymer of the invention exhibit high dart impact strengths and a low number of gels.

Pipes may be made from the polymers produced according to the present invention by any conventional technique, e.g. extrusion. As already mentioned the inclusion of the LMW component in the polymer enhances process ability, whilst the narrower PDI of the polymer as a whole (largely due to the avoidance of a low molecular weight tail on the HMW component) ensures that pipes can withstand high pressures.

## 1. Definitions and Measurement Methods

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer and the molecular weight. The MFR is determined at 190°C for polyethylene. It may be determined at different loadings such as 2.16 kg (MFR$_2$), 5 kg (MFR$_5$) or 21.6 kg (MFR$_{21}$).

### GPC: Molecular weight averages, molecular weight distribution, and polydispersity index (Mn, Mw, MWD, PDI)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160 °C with continuous gentle shaking prior sampling in into the GPC instrument.

**Density** was determined according to ISO 1183 on compression-moulded specimens.

**Bulk density** was determined according to ASTM D1895-96, method A, by filling a container with known volume (100ml) with polymer powder and measuring the weight of polymer. Bulk density is calculated as $kgPE/m^3$.

**Average (or Mean) Particle size distribution was** measured with Coulter Counter LS200 at room temperature with n-heptane as medium; particle sizes below 100 nm by transmission electron.

**Comonomer content** of the obtained products was measured in a known manner based on Fourier transform infrared spectroscopy (FTIR) calibrated with $^{13}$C-NMR, using Nicolet Magna 550 IR spectrometer together with Nicolet Omnic FTIR software.

Films having a thickness of about 220 to 250 $\mu$m were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

**Elemental analysis of the catalysts**

The elemental analysis of the catalysts was performed by taking a solid sample of mass, M, cooling over dry ice. Samples were diluted up to a known volume, Vol, by dissolving in nitric acid ($HNO_3$, 65 %, 5 % of Vol) and freshly deionised (DI) water (95 % of Vol), the samples were left to stabilize for two hours. The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a low standard (10 ppm Al in a solution of 5 % HNO3 in DI water, a high standard (100 ppm Mg, 50 ppm Al, 50 ppm Ti in a solution of 5 % $HNO_3$ in DI water) and a quality control sample (50 ppm Mg, 20 ppm Al, 20 ppm Ti and in a solution of 5 % $HNO_3$ in DI water).

The content of aluminium was monitored via the 167.081 nm line, when Al concentration in ICP sample was between 0-10 ppm and via the 396.152 nm line for Al concentrations between 10-100 ppm. The magnesium concentration was monitored via the 285.213 nm line and the titanium content via the 323.452 nm line.

The reported values, required to be between 0 and 100, or further dilution is required, are an average of three successive aliquots taken from the same sample and are related back to the original catalyst using equation 1.

$$C = (R \times Vol)/M \qquad \text{Equation 1}$$

Where: C is the concentration in ppm, related to % content by a factor of 10,000, R is the reported value from the ICP-AES, Vol is the total volume of dilution in ml, M is the original mass of sample in g.

If dilution was required then this also needs to be taken into account by multiplication of C by then dilution factor.

**2. Preparation of the Catalyst**

a) Preparation of Mg complex

87 kg of toluene was added into a multi purpose reactor. Then 45.5 kg Bomag A (20% solution in heptane) were added to the reactor. 161 kg 99.8 % 2-ethyl-1-hexanol (2-EHA) were then introduced into the reactor at a flow rate of 24-40 kg/h. 2-EHA had been earlier dried with molecular sieves. The reaction temperature was kept below 38°C. The solution was mixed for 30 minutes and cooled to room temperature.

The molar ratio between BOMAG-A and 2-ethyl-1-hexanol was 1:1.83.

b) Solid catalyst component preparation:

275 kg silica (ES747JR of Crossfield, having average particle size of 20 μm) activated at 600°C in nitrogen were charged into a catalyst preparation reactor. Then 411 kg 20 % EADC (2.0 mmol/g silica) diluted in 555 litres pentane were added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) were added at 23°C during ten minutes. 86 kg pentane were added into the reactor at 22°C during ten minutes. The slurry was stirred for 8 hours at 50°C. Finally 52 kg TiCl$_4$ were added during 0.5 hours at 45°C. The slurry was stirred at 40°C for five hours. The catalyst was then dried by purging with nitrogen.

Catalyst composition was: 3.1wt% of Al, 2.3wt% of Mg, 2.3wt% of Ti and 14.1 wt% of Cl.

### 3. Copolymerization of ethylene and 1-butene

This Example was performed to show the improvement in bulk density using DEAC or TEA/DEAC compared to the use of TEA alone.

Polymerizations were carried out in 3 l stainless steel autoclave reactor equipped with a stirrer and continuous supply of ethylene.

1800 ml of i-butane were added into the reactor at room temperature as reaction medium. The temperature was then increased to 85°C. The procatalyst and the co-catalyst were fed into the reactor by means of two feed vessels that were connected in line to the reactor lid. About 75 - 100 mg of the procatalyst was added into the upper feed vessel together with 10 ml (6.3 g, 87 mmol) of pentane. An appropriate amount of the co-catalyst, i.e. TEA, 1:1 mixture of TEA/EADC or DEAC was added to the lower feed vessel. An Al/Ti molar ratio of 15 was used in the co-polymerization with TEA and with the mixed co-catalyst and about 30 with the DEAC co-catalyst. The co-catalyst was first let into the reactor and the procatalyst was after that introduced by pressurising the upper feed vessel to 30 bar with N$_2$ and there after letting the over pressure push in the catalyst in to the reactor. This manoeuvre was done three times. Two additional feed vessels were connected in series between the lid of the reactor and the ethylene monomer feed line. 150 ml (89.3 g, 1.59 mol) of butene (C$_4$") co-monomer were introduced into the lower feed vessel. 2 bar of H$_2$ pressure was added to the upper 500 ml feed vessel (44.6 mmol). The polymerization was started by opening the monomer feed line and thereby introducing both the co-monomer and the H$_2$ together with the ethylene monomer. Partial pressure of added ethylene was varied pending on the amount of hydrogen added. A pressure of about 22.5 bar was maintained by the ethylene feed trough out the test polymerization. The co-polymerization was carried out at 85°C. The co-polymerization was continued for 60 min. The polymerization was stopped by venting off the monomer and the iso-butane. The results are shown in Table 1. MFR and bulk density were measured from the co-polymers. Mw, Mn and PDI were measured by GPC and the C$_4$" % in the co-polymer was measured by IR as disclosed above.

Table 1:

| Cocatalyst | TEAL | TEAL/EADC | DEAC |
|---|---|---|---|
| MFR(21) | 28.8 | 4.6 | 2.3 |
| BD, kg/m3 | sticky | 390 | 435 |
| C$_4$" Cont., wt% | 6.5 | 5.2 | 5.1 |
| GPC Mw | 127 000 | 191 000 | 226 000 |
| GPC Mn | 32 800 | 56 600 | 72 200 |
| PDI | 3,9 | 3.4 | 3,1 |
| Density kg/m3 | 922.4 | 918.7 | 917.6 |

The results from Table 1 showed that a substantially higher Mw and Mn could be achieved when using the mixed TEA/EADC co-catalyst compared to when using the TEA co-catalyst alone. The MFR results confirmed the change in Mw as the MFR values were higher when using the TEA co-catalyst compared to when using the mixed TEA/EADC co-catalyst.

The copolymer produced with the TEA co-catalyst was sticky, so sticky indeed that bulk density measurements became uncertain. Contrary to this, none of the copolymers produced either with the TEA/EADC mixed co-catalyst or with the DEAC co-catalyst were sticky. These polymers showed a quite good bulk density of 390 kg/m$^3$, respectively 435 kg/m$^3$.

The Mw and Mn results from the copolymers achieved with the DEAC co-catalyst are in total agreement with the results achieved with the mixed TEA/EADC co-catalyst. Mw and Mn were higher compared to the values achieved from co-polymers created with the TEA co-catalyst. PDI was narrow, being between 3.3 - 3.2 with a slightly decreasing trend by time.

**4. Two-stage polymerization**

The first stage was made twice, first to make a unimodal material with known polymer properties (see table 2), then this first stage polymerisation was repeated and polymerisation was continuing is second stage.

**4.1**

**First stage**

**Copolymerization of ethylene to produce the LMW component (batch slurry polymerization):**

A 5 litre autoclave reactor was used. 1300 g of propane was introduced into the reactor as reaction medium. 27.2 bar of $H_2$-pressure was added from 560 ml feed vessel into the reactor.The temperature of the reactor system was set to 85°C and the catalyst (prepared according to the method described above) and the co-catalyst were fed into the reactor by means of two feed vessels that were connected in line to the reactor lid. About 100 mg of catalyst A was added into the upper feed vessel together with 3 ml of pentane. The co-catalyst (DEAC) was added to the lower feed vessel with Al/Ti molar ratio of 30 mol/mol. The catalyst and co-catalyst were added into the reactor by automatic feeding system utilising propane flush. 25g of hexene ($C_6$") co-monomer were introduced into the premixing chamber. The polymerization was started by opening the monomer feed line through the premixing chamber. A pressure of about 44.5 bar was maintained by the ethylene feed trough out the polymerization. The polymerization was carried out at 85°C for 30 min after which it was stopped by venting off the monomer and propane. The amount of produced polymer in first stage was estimated from the ethylene mass flow meter.

**Second stage**

**Ethylene - hexene co-polymerization to produce the HMW component:**

The second stage in the polymerisation was carried out in the same 5 l autoclave reactor as described above containing the previously prepared copolymer. After venting off the medium and monomer from the first stage, the reactor and polymer was purged with nitrogen 3 times. Then approximately 25 bar of nitrogen was introduced into the reactor as fluidizing medium. An empty automatic feed utilising propane was made to harmonize all tests, the reactor pressure rose to approximately 28 bar because of this feed. The hexene ($C_6$") co-monomer feed was set to follow monomer feed (13wt%) from ethylene feed). At 85°C the polymerisation and data collection was started again. Partial pressure of ethylene was 3 bar. A pressure of about 27.2 bar was maintained by the ethylene feed trough out the test polymerisation. The co-polymerisation was continued for 120 minutes. The polymerisation was stopped by venting off the monomer, comonomer and nitrogen. The results from these polymerisations are listed in Table 2.

**4.2**

The example 4.1 was repeated but TEA was used as a cocatalyst in first stage with Al/Ti-molar ratio 20 mol/mol and additional DEAC co-catalyst was fed into the second polymerisation stage with Al/Ti molar ratio of 30 mol/mol

**4.3: Comparative example:**

The example 4.1 was repeated but TEA was used as co-catalyst with Al/Ti molar ratio of 20 mol/mol.

Table 2:

| BIMODAL SLURRY/GPR | EXAMPLE 4.1 | EXAMPLE 4.2 | COMPARATIVE EXAMPLE 4.3 |
|---|---|---|---|
| **Slurry (1st stage)** | | | |
| Co-catalyst<br>Al/Ti mol/mol | DEAC<br>30 | TEA loop<br>20 | TEA<br>20 |
| Loop $MFR_2$ [g/10min] | 13 | 101 | 101 |
| Mw | 75 500 | 39 100 | 39 100 |
| Mn | 12 000 | 4 800 | 4 800 |
| PDI (Mw/Mn) | 6.3 | 8.2 | 8.2 |
| $C_6$ (wt%) | 1.8 | 1.4 | 1.4 |
| Density [$kg/m^3$] | 954 | 956 | 956 |
| Bulk density | > 400 | 390 | 390 |
| Time (min) | 30 | 30 | 30 |
| **GPR (2nd stage)** | | | |
| Co-catalyst<br>Al/Ti mol/mol | No extra addition | DEAC<br>20 | No extra addition |
| Split [wt%/wt%] | 39/61 | 47/53 | 36/64 |
| Time (min) | 120 | 120 | 120 |
| Yield of polymer (g) | 315 | 206 | 326 |
| $MFR_{21}$ [g/10min] (final) | 0.7 | 3.0 | 1.25 |
| Mw (final) | 395 000 | 242 000 | 319 000 |
| Mn (final) | 43 800 | 18 400 | 23 500 |
| PDI (final) | 9.0 | 13.1 | 13.6 |
| $C_6$ [wt%] (final) | 6.9 | 3.0 | 3.4 |
| Density [$kg/m^3$] (final) | 922 | 940 | 934 |
| Bulk density (final) | 430 | 400 | 370 |
| **Calculated properties** | | | |
| Polymer amount (2nd stage) | 192 | 109 | 209 |
| Calc. comonomer content in polymer produced in GPR (w%) | 10,2 | 4,4 | 4,6 |
| Calc. Density of GPR (2nd stage) | 901 | 926 | 916.6 |
| Calc. $C_6$ conversion (%) (2nd stage) | 81 | 31 | 34 |

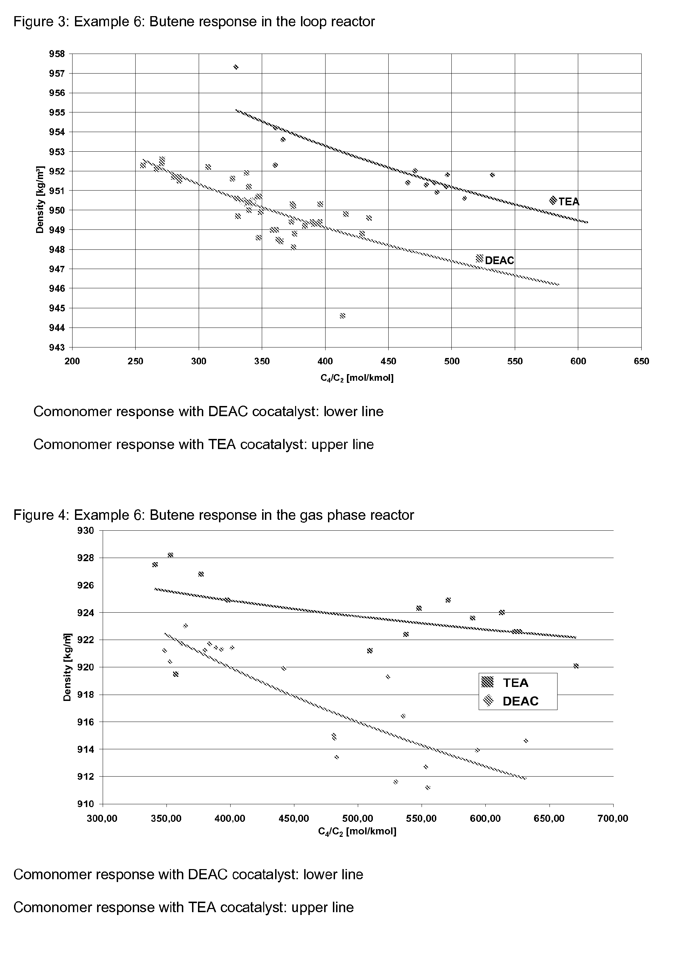

From the results obtainable from Table 2, it can be seen that DEAC has contributed a remarkable positive effect on the comonomer response (can be seen in the final density of polymer, and in the calculated 2nd stage comonomer content, density and C6 conversion). Also, for polymer morphology (measured by bulk density) a really big impact can be seen. These results are extremely well in line with results seen in unimodal test polymerisation (Table 1) as well as with pilot plant results. (Figures 3 and 4).

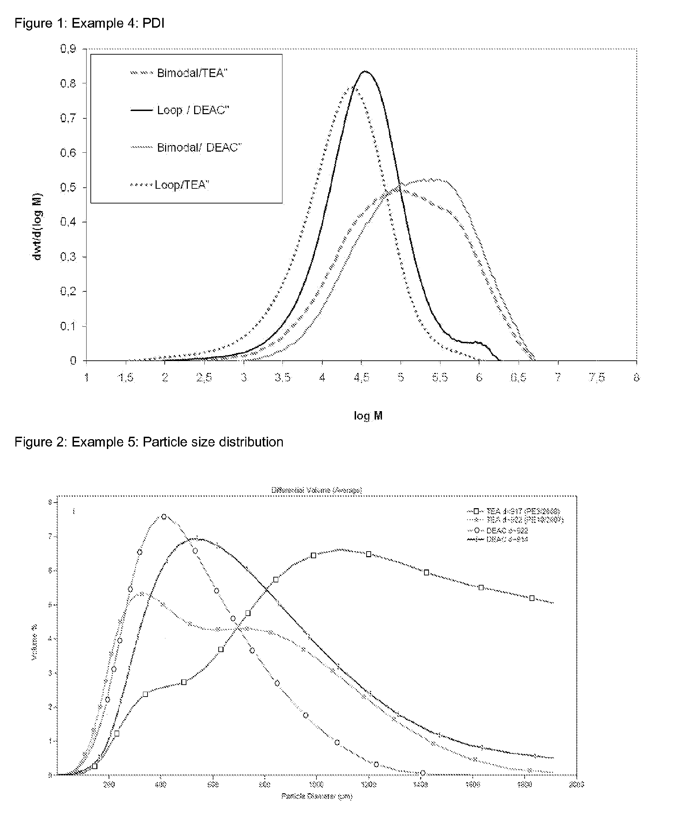

From these results it can be further clearly seen that the use of DEAC improved the comonomer conversion (about twice the one obtained with TEA). This result is very important because it means that to reach the same polymer properties the comonomer feed into the reactor can be decreased by a factor 2. This will help for the prevention of the formation of sticky material. In addition, the molecular weight distribution was narrower (Figure 1) and more specifically the low molecular weight end was reduced to the benefice of the high molecular weight. Consequently less, soluble/ sticky material was formed in presence of DEAC.

**5. Two-stage polymerization pilot scale**

A continuously operated Borstar® process consisting of a pre-polymerization reactor, one loop reactor and one gas phase reactor was used to test catalyst activated by DEAC and TEA (=as a comparison) in pilot scale.

**Pre-polymerisation reactor zone**

Catalyst was fed continuously into pre-polymerisation loop reactor Prepolymerization conditions according to Table 3:

**Table 3:** Prepolymerization conditions

| A1 - PREPOLY | | | |
|---|---|---|---|
| temperature | °C | 70 | 70 |
| pressure | bar | 60 | 60 |
| catalyst feed | g/h | 7,0 | 13,5 |
| cocatalyst | | TEA | DEAC |
| cocatalyst feed | g/h | 5,9 | 10,0 |
| $C_2$ feed | kg/h | 2,0 | 2,0 |
| $H_2$ feed | g/h | 7,9 | 5,1 |
| $C_4/C_6$ feed | g/h | 78,4 | 100,4 |
| $C_3$ feed | kg/h | 44,2 | 43,2 |
| production rate | kg/h | 1,9 | 1,9 |

**Loop reactor zone**

Prepolymerized catalyst/polymer was transferred continuously into a loop reactor having a volume 500 dm$^3$ and which was operated at 85°C temperature and 57 bar pressure. Into the reactor were introduced propane diluent, ethylene, butene comonomer and hydrogen.
Constant loop reactor conditions are listed in Table 4.

Table 4: Loop reactor zone conditions

| A2 - LOOP | | DEAC | TEA |
|---|---|---|---|
| temperature | °C | 85 | 85 |
| pressure | bar | 57 | 57 |
| A2 cocatalyst feed | g/h | 4,2 | 7,3 |
| $C_2$ feed | kg/h | 31 | 31 |
| $H_2$ feed | g/h | 123 | 186 |
| Butene (C4) feed | kg/h | 4,9 | 3,4 |
| Propane ($C_3$) feed | kg/h | 116 | 90 |
| Ethene ($C_2$) concentration | mol-% | 5,8 | 5,5 |
| $H_2/C_2$ ratio | mol/kmol | 276 | 602 |

(continued)

| A2 - LOOP | | DEAC | TEA |
|---|---|---|---|
| $C_4/C_2$ ratio | mol/kmol | 479 | 395 |
| $C_4/C_2$ feed ratio | g/kg | 156 | 112 |
| production rate | kg/h | 27,8 | 28,0 |
| split | wt-% | 40 | 39 |
| A2 MFR2 | g/10min | 337,5 | 356,0 |
| A2 density | kg/m3 | 951,7 | 949,4 |
| A2 bulk density | kg/m3 | 410 | 478 |
| A2 APS | mm | 0,24 | 0,39 |
| APS: average particle size | | | |

The slurry was intermittently withdrawn from the reactor by using a settling leg and directed to a flash tank operated at a temperature of about 50°C and a pressure of about 3 bar.

**Gas phase reactor zone**

From the flash tank the powder, containing a small amount of residual hydrocarbons, was transferred into a gas phase reactor operated at 85°C temperature and 20 bar pressure. Into the gas phase reactor additional ethylene, butene comonomer and nitrogen as inert gas were introduced in such amounts that the ethylene concentration in the circulating gas was controlled in range 7-12% by mole for keeping production rate constant. The polymer production rate was 40 kg/h. Constant gas phase reactor conditions are listed in Table 5.

Table 5: Gas phase reactor zone conditions and polymer properties

| A3 - GPR | | DEAC | TEA |
|---|---|---|---|
| temperature | °C | 85 | 85 |
| pressure | bar | 20 | 20 |
| cocatalyst feed | No additional cocatalyst feed | | |
| $C_2$ feed | kg/h | 41 | 38 |
| H2 feed | g/h | 1 | 5 |
| $C_6$ feed | kg/h | 0 | 0 |
| $C_4$ feed | kg/h | 14,4 | 13,2 |
| $C_2$ conc. | mol-% | 11,2 | 7,6 |
| $H_2/C_2$ ratio | mol/kmol | 5,93 | 34,40 |
| $C_4/C_2$ ratio | mol/kmol | 621 | 593 |
| $C_4/C_2$ feed ratio | g/kg | 352 | 352 |
| production rate | kg/h | 40 | 41 |
| productivity (overall) | kg/g | 10 | 5 |
| split (process calc.) | wt-% | 57 | 58 |
| A3 MFR5 | g/10min | 2,85 | 3,70 |
| A3 MFR21 | g/10min | 59 | 67 |
| FRR21/5 | - | 20,7 | 18,1 |
| A3 density | kg/m3 | 921,4 | 914,6 |

In figure 2 the polymer particle size distribution from polymers produced according to the above Example 5: Example 5a (using DEAC, density 922), Example 5b (using DEAC, density 914) and Comparative Example 5c (using TEA, density 922) Comparative Example 5d (using TEA, density 917) is shown.

From figure 2, it can be clearly seen that LLDPE prepared with DEAC as cocatalyst shows reduced stickiness of polymer.

It has been known for years that production of LLDPE with density bellow 920 is very difficult and has caused several shout downs of pilot trials and even commercial scale processes. This is demonstrated in Figure 2:

When process limitations (density below 920 kg/m$^3$; polymer becomes too sticky) are approached it has been observed that if TEA was used as cocatalyst particle size distribution became extremely broad and remarkably fraction of very large agglomerated polymer particles are formed. Even with a density of 922 kg/m$^3$ some agglomerates already appeard if TEA was used as cocatalyst. When DEAC was used as a cocatalyst for producing LLDPE with a density of 922 kg/m$^3$, agglomeration tendency was clearly reduced. It can be seen that particle size of polymers produced with DEAC (density of 922 kg/m$^3$) was much narrower, virtually no large polymer clumps were produced and polymer particle size was about 500 $\mu$m. When density went down, it can be seen that TEA activated catalyst has formed very highly agglomerated polymer powder showing extremely broad particle size distribution (for density of 917 kg/m$^3$) and is not anymore feasibly to lower the polymer density because of high risk to totally block the polymerisation reactor with very sticky polymer. However, by using DEAC as a cocatalyst, even 914 kg/m$^3$ density was possible and polymer morphology and particle size distribution was very good.

**6. Comparison of comonomer conversion in pilot scale**

From Figure 3 the butene response in the loop reactor is shown.

From figure 3, it can be clearly seen that remarkably less comonomer was needed for reaching same density when DEAC was used as a cocatalyst compared to the use of TEA. For making a copolymer with a density of 950 kg/m$^3$ over 500 mol/kmol of butane was needed if traditional TEA was used as the cocatalyst. When using DEAC, a density of 950 kg/m$^3$ was reached by applying 350 mol/kmol butane what was remarkably less compared to the use of TEA.

From Figure 4 the butene response in the gas phase reactor is shown.

According to the results, it was even more beneficial to use DEAC as a cocatalyst in the GPR and roughly about 50% less comonomer was needed compared to the use of TEA as cocatalyst.

It can be clearly seen, that TEA gave rather bad comonomer response. However, by using DEAC densities bellow 920 kg/m$^3$ can be produced rather easily and with moderated comonomer ratio (mol butane/ kilo mole ethylene). Some spot samples were even bellow 912 kg/m$^3$ density.

**Claims**

1.  Multi-stage process for the production of linear low density polyethylene in at least two staged reactors connected in series comprising

    (i) polymerizing ethylene monomers and optionally one or more alpha-olefine comonomers, in the presence of a Ziegler-Natta polymerisation catalyst system to obtain a first polyethylene fraction component (A)
    (ii) polymerizing ethylene monomers and optionally one or more alpha-olefine comonomers, in the presence of a Ziegler-Natta polymerisation catalyst system to obtain a second polyethylene fraction component (B),
    wherein the second polymerization step is carried out in the presence of the polymerization product of the first polymerization step and
    wherein either the polyethylene fraction component (A) or (B) forms the low molecular weight component of the bimodal linear low density polyethylene and the other polyethylene fraction forms the high molecular weight component of the bimodal linear low density polyethylene,
    whereby the Ziegler-Natta polymerisation catalyst system comprises
    C) a procatalyst, which procatalyst comprises

    a) an Al compound having the formula Al(alkyl)$_x$Cl$_{3-x}$(I), where alkyl is an alkyl group with 1 to 12 and $0 \leq x \leq 3$,
    b) a magnesium hydrocarbyloxy compound of formula Mg(OR$^1$)$_{2-n}$(R$^2$)$_n$ (II), wherein each R$^1$ and R$^2$ is independently a C$_{1-20}$ hydrocarbon residue which may optionally be substituted with halogen and $0 \leq n < 2$ and
    c) a chlorine-containing titanium compound of the formula Cl$_y$Ti(OR$^3$)$_{4-y}$ (III), wherein R$^3$ is a C$_{2-20}$ hydrocarbon residue and y is 1, 2, 3 or 4 and

compounds a), b) and c) being deposited on a particulate inorganic support and

D) a halogenated aluminium alkyl cocatalyst of the formula (IV) $(C_1-C_4-alkyl)_m-Al-X_{3-m}$, wherein X is chlorine, bromine, iodine or fluorine and m is 1 or 2, and

yielding a multimodal linear low density polyethylene with a narrow molecular weight distribution, measured with GPC, in the range of 5 to 20, a bulk density of the polymer powder, determined according to ASTM D1895-96, method A of at least 250kg/m$^3$ to 500kg/m$^3$, a density according to ISO 1183 of less than 925 kg/m$^3$ and a $C_4-C_{12}$-comonomer content of 1 to 10 wt%,

whereby the process shows a higher comonomer conversion compared to multi-stage processes using non-halogenated cocatalysts.

2. Process according to claim 1 wherein the halogenated aluminium alkyl cocatalyst of the formula (IV) is selected from the group consisting of dimethyl aluminium chloride, diethyl aluminium chloride, diisobutyl aluminium chloride, ethyl aluminium dichloride and methyl aluminium dichloride.

3. Process according to claim 1 or 2 wherein ethyl aluminium dichloride or diethyl aluminium chloride are used alone as cocatalyst or in combination with triethyl aluminium in a molar ratio of halogenated aluminium alkyl:TEAL is from 5: 95 to 95:5.

4. Process according to any of preceding claims 1 to 3 wherein the procatalyst is obtainable by

- contacting said inorganic support with the alkyl aluminium chloride a) to give a first reaction product,
- contacting said first reaction product with the magnesium complex b) to give a second reaction product and
- contacting said second reaction product with the titanium compound c) to give said procatalyst.

5. Process according to any of preceding claims 1 to 3 wherein the procatalyst is obtainable by

- reacting the magnesium complex b) with the alkyl aluminium chloride a) in a non polar hydrocarbon solvent in which said magnesium complex is soluble to produce a solution (A)
- contacting said solution (A) with the titanium compound c) to produce a solution (B) and
- contacting said solution (B) with said inorganic support to give said procatalyst.

6. Process according to any of preceding claims 1 to 5 wherein the procatalyst is composed of ethyl aluminium dichloride as catalyst component a), a magnesium complex b) prepared by reacting butyl octyl magnesium and 2-ethyl-1-hexanol, and titanium tetrachloride as component c), which are deposited on a silica support.

7. Process according to any of preceding claims 1 to 5, wherein the polymerization process includes one or two additional polymerization steps, subsequent to the second polymerization step.

8. Process according to claim 7, wherein the one or two additional polymerization steps comprise gas phase polymerization stages.

9. Process to any of preceding claims 1 to 8, wherein faction component (A) produced in the first slurry phase stage is the lower molecular weight component of the linear low density polyethylene and faction component (B) produced in the second stage is the higher molecular weight component of the linear low density polyethylene.

10. Process according to any of preceding claims 1 to 9, wherein the split (wt%/wt%) between the fraction component (A) and (B) is from 10/90 to 90/10.

11. Process according to any of preceding claims 1 to 10, wherein the alpha-olefine comonomer is a $C_{4-12}$-alpha-olefine, preferably selected from but-1-ene, hex-1-ene, 4-methyl-pent-1-ene, hept-1-ene, oct-1-ene, and dec-1-ene.

12. Process according to claim 11, wherein the comonomer is hex-1-ene or but-1-ene or a mixture of hexene and butene.

13. A polymer obtainable by the process as claimed in any one of claims 1 to 12.

Figure 1: Example 4: PDI

Figure 2: Example 5: Particle size distribution

Figure 3: Example 6: Butene response in the loop reactor

Comonomer response with DEAC cocatalyst: lower line

Comonomer response with TEA cocatalyst: upper line

Figure 4: Example 6: Butene response in the gas phase reactor

Comonomer response with DEAC cocatalyst: lower line

Comonomer response with TEA cocatalyst: upper line

Europäisches
Patentamt

European
Patent Office

Office européen
des brevets

## EUROPEAN SEARCH REPORT

**Application Number**

EP 09 15 9142

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 155 078 A (KIOKA MAMORU [JP] ET AL) 13 October 1992 (1992-10-13) * examples 1-5,9; table 1 * * examples 11-14; table 2 * * examples 15-18; table 3 * * examples 20-23; table 4 * * example 26; table 5 * * examples 28-30,34; table 6 * | 1-3, 11-13 | INV. C08F210/16 C08F2/00 C08F4/655 |
| Y | * claims 1-10 * * column 18, line 64 - line 66 * ----- | 1,4,5 | |
| X | EP 1 057 834 A (UNION CARBIDE CHEM PLASTIC [US]) 6 December 2000 (2000-12-06) * examples 1-8 * * claims 1,3,4,6,8,9 * * paragraph [0016] - paragraph [0021] * * paragraph [0026] * ----- | 1,2,9-13 | |
| E | WO 2009/076733 A (BRASKEM S A [BR]; DO NASCIMENTO ALAN KARDEC [BR]; ROCHA ETIENNE MARCOS) 25 June 2009 (2009-06-25) * page 16, line 8 - page 18, line 12 * * page 19, line 14 - line 22 * * page 20, line 19 - page 21, line 21 * * page 24, line 19 - page 27, line 7; table 2 * * claims 1-4,12,17,18,24-28 * ----- | 1-3, 9-11,13 | TECHNICAL FIELDS SEARCHED (IPC) C08F |
| A | US 5 777 050 A (FRIEDERICHS NICOLAAS H [NL] ET AL) 7 July 1998 (1998-07-07) | 1-13 | |
| Y | * examples I,XIII * ----- | 1,5 | |
| A | EP 2 003 151 A (NOVA CHEMICALS CORP [CA]; INEOS EUROPE LTD [GB]) 17 December 2008 (2008-12-17) | 1-13 | |
| Y | * examples 1-19 * * claims 1,2,7,10,11,20-23 * ----- | 1,4 | |

-/--

The present search report has been drawn up for all claims

| Place of search | Date of completion of the search | Examiner |
|---|---|---|
| Munich | 21 September 2009 | Gamb, Véronique |

EPO FORM 1503 03.82 (P04C01)

Europäisches
Patentamt
European
Patent Office
Office européen
des brevets

**EUROPEAN SEARCH REPORT**

Application Number

EP 09 15 9142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/014475 A (DOW GLOBAL TECHNOLOGIES INC [US]; SCHOUTERDEN PATRICK J C [BE]; NICASY) 9 February 2006 (2006-02-09) * claims 1,2,4-7,13 * * examples 1-5 * * page 16, line 30 - line 33 * * page 19, line 16 - line 26 * ----- | 1-13 | |

TECHNICAL FIELDS
SEARCHED (IPC)

The present search report has been drawn up for all claims

| Place of search | Date of completion of the search | Examiner |
|---|---|---|
| Munich | 21 September 2009 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 15 9142

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2009

| Patent document cited in search report | | Publication date | Patent family member(s) | | Publication date |
|---|---|---|---|---|---|
| US 5155078 | A | 13-10-1992 | CA | 1335094 C | 04-04-1995 |
| | | | EP | 0408750 A1 | 23-01-1991 |
| | | | WO | 8910942 A1 | 16-11-1989 |
| EP 1057834 | A | 06-12-2000 | AT | 321790 T | 15-04-2006 |
| | | | AU | 3647300 A | 07-12-2000 |
| | | | BR | 0002576 A | 02-01-2001 |
| | | | CA | 2311115 A1 | 04-12-2000 |
| | | | DE | 60026935 T2 | 30-11-2006 |
| | | | ES | 2261153 T3 | 16-11-2006 |
| | | | JP | 3684324 B2 | 17-08-2005 |
| | | | JP | 2001019707 A | 23-01-2001 |
| | | | US | 6187866 B1 | 13-02-2001 |
| WO 2009076733 | A | 25-06-2009 | US | 2009163679 A1 | 25-06-2009 |
| US 5777050 | A | 07-07-1998 | NONE | | |
| EP 2003151 | A | 17-12-2008 | CA | 2633381 A1 | 15-12-2008 |
| | | | US | 2008312391 A1 | 18-12-2008 |
| WO 2006014475 | A | 09-02-2006 | AR | 049966 A1 | 20-09-2006 |
| | | | AU | 2005269937 A1 | 09-02-2006 |
| | | | BR | PI0512760 A | 08-04-2008 |
| | | | CA | 2570370 A1 | 09-02-2006 |
| | | | CN | 1980959 A | 13-06-2007 |
| | | | EP | 1773892 A1 | 18-04-2007 |
| | | | JP | 2008506015 T | 28-02-2008 |
| | | | KR | 20070039534 A | 12-04-2007 |
| | | | US | 2008051528 A1 | 28-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0688794 A
- EP 0835887 A
- WO 0155230 A
- US 4582816 A
- US 3405109 A
- US 3324093 A
- EP 479186 A
- US 5391654 A
- EP 0517868 A
- EP 0887379 A
- EP 1633466 A
- EP 2011822 A
- US 3374211 A
- US 3242150 A
- EP 1310295 A
- EP 891990 A
- EP 1415999 A
- EP 1591460 A
- EP 1860125 A
- EP 707513 A
- EP 1484343 A
- WO 9704015 A

### Non-patent literature cited in the description

- **Geldart.** Gas Fluidization Technology. J.Wiley & Sons, 1986
- **K. B. McAuley.** Modelling, Estimation and Control of Product Properties in a Gas Phase Polyethylene Reactor. *Thesis,* August 1991
- **K. McAuley ; J. McMacGregor.** *AIChE Journal,* vol. 37 (6), 825-835
- **B. Hagström.** Prediction of melt flow rate (MFR) of bimodal polyethylenes based on MFR of their components, in: Conference on Polymer Processing (The Polymer Processing Society). *Extended Abstracts and Final Programme,* 19 August 1997, vol. 4, 13